# EUROPÄISCHE PATENTSCHRIFT

(11) **EP 1 034 137 B1**
(45) Veröffentlichungstag und Bekanntmachung des Hinweises auf die Patenterteilung: **01.08.2001**
(21) Anmeldenummer: 98954057.0
(22) Anmeldetag: 12.11.1998
(51) Int. Cl.: C02F 1/00

(54) **VERFAHREN UND VORRICHTUNG ZUR REINIGUNG VON ABWASSER**
METHOD AND DEVICE FOR THE PURIFICATION OF WASTE WATER
PROCEDE ET DISPOSITIF POUR EPURER DES EAUX USEES

(30) Priorität: 20.11.1997 AT 197097; 26.06.1998 AT 112398
(43) Veröffentlichungstag der Anmeldung: 13.09.2000
(73) Patentinhaber: Gassner, Kurt, 2011 Sierndorf (AT)
(72) Erfinder: Gassner, Kurt, 2011 Sierndorf (AT)
(74) Vertreter: Babeluk, Michael, Dipl.-Ing. Mag.
(86) Internationale Anmeldenummer: AT9800280
(87) Internationale Veröffentlichungsnummer: WO9926882

(56) Entgegenhaltungen:
- EP-A- 0 474 325
- EP-A- 0 633 866
- WO-A-96/16909
- DE-A- 2 243 861
- DE-U- 9 311 577
- PATENT ABSTRACTS OF JAPAN vol. 008, no. 011 (C-205), 18. Januar 1984 & JP 58 180295 A (MITSUBISHI KAKOUKI KK), 21. Oktober 1983

## Beschreibung

Die vorliegende Erfindung betrifft ein Verfahren zur Reinigung von Abwasser, bei dem wiederholt folgende Schritte ausgeführt werden:
- Zufuhr von Abwasser in einen Reaktor;
- Belüften des Reaktorinhaltes;
- Beenden der Belüftung, um Schlamm absetzen zu lassen;
- Abzug von Klarwasser und Schlamm.

Dabei kann der Reaktor während des Belüftens und des Absetzens unter einem gegenüber dem Umgebungsdruck erhöhten Druck gehalten werden. Durch den höheren Sauerstoff-Partialdruck erfolgt eine stärkere Umsetzung und dadurch eine Beschleunigung der biologischen Prozesse.

Es sind seit geraumer Zeit biologische Kläranlagen bekannt, die nach dem sogenannten SBR (Sequence Batch Reactor) Verfahren arbeiten. Im Gegensatz zu kontinuierlich arbeitenden Kläranlagen, bei denen der jeweilige Zufluss und Abfluss der augenblicklich anfallenden Abwassermenge entspricht, wird bei dem SBR-Verfahren eine vorbestimmte Abwassermenge gesammelt und dann in kurzer Zeit in einen Reaktor eingepumpt. Die Behandlung des Abwassers in dem Reaktor erfolgt dabei im wesentlichen ohne weitere Zufuhr von Abwasser. Nach der Beendigung eines Behandlungszyklus wird der Reaktor teilweise entleert. Im oberen Bereich des Reaktors wird dabei Klarwasser abgezogen, und aus einem unteren Bereich des Reaktors wird eine geringe Menge Schlamm abgezogen, der einer Entsorgung zugeführt wird. Im Vergleich zu kontinuierlich beschickten Belebtschlammverfahren bietet das SBR-Verfahren einige entscheidende Vorteile. Der Reinigungsprozess findet bei diesem Verfahren losgelöst von hydraulischen Zulaufschwankungen statt. Weiters kann die Dauer der Reaktionszeiten auf einfache Weise und ohne bauliche Veränderungen an variable Zulaufkonzentrationen angepasst werden. Dadurch werden die Schwankungen der Ablaufkonzentrationen minimiert. Die zeitweilig erhöhten Substratkonzentrationen bewirken eine Steigerung der bakteriellen Stoffumsatzgeschwindigkeiten. Ferner kann die Vermeidung von Blähschlamm und die Selektion von flockenbildenden Bakterien durch den periodischen Wechsel zwischen Nährstoffangebot während der Füllphasen und Nährstoffmangel zum Ende der Reaktionsphasen erreicht werden. Dabei findet die Sedimentation des Belebtschlammes unter strömungsfreien Bedingungen statt und kann gegebenenfalls gut überwacht werden.

Wesentlich bei jeder Art des SBR-Verfahrens ist, dass in dem Reaktor stets eine vorbestimmte Menge Belebtschlamm verbleibt, so dass der Nutzinhalt des Reaktors, d. h. die pro Behandlungszyklus zuzugebende Abwassermenge, nur einen Bruchteil des Gesamtinhalts des Reaktors ausmacht. Bei herkömmlichen SBR-Verfahren wird etwa die Hälfte bis zwei Drittel des Gesamtinhalts des Reaktors als Belebtschlamm ständig zurückgehalten, während der übrige Teil für die Zufuhr von Abwasser vorgesehen ist. Nach der Zufuhr von Abwasser wird der Reaktor in üblicher Weise belüftet, um eine Nitrifikation durchzuführen. Gegebenenfalls kann vor der Belüftung durch einen anaeroben Verfahrensabschnitt eine Denitrifikation durchgeführt werden. Nach der Beendigung der Belüftung folgt eine Absetzphase, um oberhalb des Belebtschlamms eine Schicht von Klarwasser auszubilden. Danach wird das Klarwasser abgezogen. Um die Menge der Biomasse und des Schlammes im Reaktor konstant zu halten, ist jedoch auch gleichzeitig ein Abzug einer gewissen Schlamm-Menge erforderlich.

Es ist auch bekannt, belüftete und unbelüftete Zonen innerhalb eines Batch-Reaktors räumlich zu trennen. Dabei muss jedoch der Belebtschlamm durch Umpumpen zwischen aeroben und anaeroben Bereichen hin- und hergeführt werden. Ein solches Verfahren ist jedoch aufwendig und sensibel gegenüber Störeinflüssen.

Die EP 0 453 881 A1 betrifft ein Verfahren zum biologischen Reinigen von Abwasser und eine Anlage zur Durchführung des Verfahrens. Der in dieser Druckschrift beschriebene Reaktor wird im Schlaufenbetrieb gefahren. Dabei ist ein zylindrischer Reaktor vorgesehen, in dem ein oben und unten offenes Rohr eingeführt wird. Durch eine Düse wird eine Umwälzströmung in dem Reaktor erzeugt. Es ist jedoch bei einer solchen Lösung nicht möglich, zwei grundsätzlich unterschiedliche Verfahrensschritte in unterschiedlichen Bereichen des Reaktors auszuführen.

Weitere SBR-Verfahren sind in der WO 93/11076 A oder der DE 93 11 577.6 U beschrieben. Auch hier treten die oben beschriebenen Nachteile auf.

Nachteilig bei den bekannten Verfahren ist, dass eine relativ lange Verweilzeit des Abwassers im Reaktor erforderlich ist, um eine zufriedenstellende Qualität der Reinigung zu gewährleisten. Daher ist für eine vorgegebene Anlagengröße der mögliche Durchsatz beschränkt.

Aufgabe der vorliegenden Erfindung ist es, das bekannte Verfahren so weiterzubilden, dass bei hohen Reinigungsgraden eine große Durchsatzmenge erzielbar ist. Das Verfahren soll dabei einen möglichst geringen Regelungsaufwand besitzen und robust sein.

Erfindungsgemäß wird diese Aufgabe dadurch gelöst, dass das Klarwasser über einen Schwimmer jeweils unmittelbar unterhalb der Oberfläche abgezogen wird. Dadurch kann ein gleichmäßiger Klarwasserabzug ohne Störung des abgesetzten Schlamms erreicht werden.

Gemäß einem zweiten Aspekt der Erfindung ist zusätzlich vorgesehen, dass die Zufuhr des Abwassers in den Bereich einer Düse erfolgt, die zwei durch eine Trennwand getrennte Räume des Reaktors verbindet, um durch die Zufuhr des Abwassers eine Zirkulationsströmung zwischen den Räumen des Reaktors hervorzurufen. Wie bei der ersten Ausführungsvariante kann dadurch eine schnellere Umsetzung erzielt werden.

Bei dieser bevorzugten Ausführungsvariante laufen in unterschiedlichen Bereichen des Reaktors gleichzeitig zum Teil unterschiedliche Prozesse ab. Auf diese Weise kann die Verweilzeit des Abwassers deutlich verringert werden. Während des Befüllens des Reaktors herrschen in dem ersten Raum, in dem der Zulauf erfolgt, anaerobe Bedingungen, so dass eine Denitrifikation durchgeführt wird. Im oberen Bereich der Trennwand befindet sich eine Verbindung zwischen den beiden Räumen. Der untere Bereich dieser Verbindung ist als Überströmkante ausgebildet. Zu Beginn des Arbeitszyklus liegt der Wasserspiegel im Reaktor im Bereich dieser Überströmkante oder geringfügig darunter. Im letzteren Fall muss jedenfalls sichergestellt sein, dass der Abzug aus beiden Räumen gleichzeitig erfolgen kann. So lange der Wasserspiegel im Reaktor unterhalb der Überströmkante liegt, versucht das einströmende Abwasser durch die Düsenwirkung Abwasser vom zweiten Raum in den ersten Raum mitzureißen. Da auf diese Weise jedoch der Wasserspiegel im ersten Raum über den im zweiten Raum ansteigen würde, bildet sich an der Düse ein Druckunterschied aus, der anfänglich ein nennenswertes Überströmen vom zweiten Raum in den ersten Raum verhindert. Unter Umständen kann sogar eine geringfügige Strömung in der entgegengesetzten Richtung auftreten. Auf diese Weise liegen in der ersten Phase im ersten Raum vollständig anaerobe Bedingungen vor, die zusammen mit der Kohlenstoff-Fracht des frischen Abwassers eine hohe Denitrifikationsgeschwindigkeit gewährleisten.

Sobald der Wasserspiegel in dem ersten Raum die Überströmkante erreicht hat, findet ein völliger Ausgleich des Wasserspiegels in den beiden Räumen statt. Da die Zulauföffnung in einer Düse zwischen den beiden Räumen angeordnet ist, wird dann gleichzeitig mit dem zugeführten Abwasser Schlamm aus dem zweiten Raum in den ersten Raum mitgerissen. Als Schlamm wird hier der mit Biomasse angereicherte Teil des Reaktorinhalts verstanden. Je nach Ausbildung der Düse kann die mitgerissene Schlamm-Menge ein Mehrfaches der eingedüsten Abwassermenge ausmachen.

Durch diese Zirkulationsströmung kommt es zu einer Anreicherung des Belebtschlamms im ersten Raum. In Zusammenhang mit einer entsprechenden Steuerung der Belüftung kann auf diese Weise eine arbeitsteilige und hochwirksame Reinigung des Abwassers erreicht werden.

Weiters kann vorgesehen sein, dass die Zufuhrmenge des Abwassers in jedem Arbeitszyklus zwischen 10 und 30 %, vorzugsweise zwischen 15 und 20 % des Gesamtinhalts des Reaktors entspricht. Bei herkömmlichen SBR-Verfahren ist man davon ausgegangen, dass die Leistung einer Anlage gesteigert werden kann, indem das Verhältnis des nutzbaren Reaktorinhalts zum Gesamtinhalt möglichst groß gemacht wird. In überraschender Weise hat sich bei der vorliegenden Erfindung herausgestellt, dass bei kleineren Nutzinhalten die Verweilzeit im Reaktor in einem solchen Ausmaß verkürzt werden kann, dass bei vorgegebener Reaktorgröße ein insgesamt größerer Durchsatz bei verbesserter Reinigungsleistung gegenüber herkömmlichen Anlagen möglich ist. Diese Wirkung beruht teilweise auf der anfänglich schnelleren Absetzgeschwindigkeit des Schlamms und auf der durch das erfindungsgemäße Verfahren möglichen Schlammkonzentration, die größer ist als bei herkömmlichen Verfahren.

In einer weiteren bevorzugten Ausführungsvariante des erfindungsgemäßen Verfahrens ist vorgesehen, dass die Zufuhr von Abwasser so lange erfolgt, bis der Pegel des Reaktorinhalts eine Überströmöffnung erreicht, und dass ein geringer Teil des Reaktorinhalts über die Überströmöffnung ausströmen gelassen wird. Eine solche Verfahrensführung hat einerseits den Vorteil, dass die pro Arbeitszyklus zugeführte Abwassermenge nicht genau gemessen werden muss, da es unerheblich ist, ob etwas mehr oder weniger Reaktorinhalt über die Überströmöffnung ausströmt. Um den diskontinuierlichen Betrieb überhaupt aufrecht erhalten zu können, ist in jedem Fall ein Pufferbehälter oder dgl. vor dem Reaktor vorzusehen, in welchen Pufferbehälter der aus der Überströmöffnung austretende Reaktorinhalt rückgeführt wird. Ein weiterer Vorteil einer solchen Verfahrensführung besteht darin, dass sich in vielen Fällen an der Oberfläche des Reaktors Schwimmschlamm ausbildet, der nicht mit dem gereinigten Abwasser abgezogen werden darf. Dieser Schwimmschlamm wird in der vorliegenden Ausführungsvariante einfach über die Überströmöffnung in den Pufferbehälter rückgeführt und kann dort abgebaut werden.

Eine besondere Steigerung der Leistungsfähigkeit des erfindungsgemäßen Verfahrens durch Verkürzung der Verweilzeit kann dadurch erreicht werden, dass während der Zufuhr von Abwasser in einen ersten Raum des Reaktors die Belüftung eines zweiten Raums des Reaktors begonnen wird. Während in dem ersten Raum dabei unter anaeroben Bedingungen eine Denitrifikation durchgeführt wird, wird in dem zweiten Raum unter Sauerstoffzufuhr eine Nitrifikation durchgeführt. Durch die gleichzeitig bewirkte Zirkulationsströmung wird erreicht, dass das Abwasser zumindest einmal sowohl der Denitrifikation als auch der Nitrifikation unterzogen wird. Je nach Stärke der Zirkulationsströmung können Teile des Abwassers dieses Zyklus auch mehrfach durchlaufen.

Eine weitere Steigerung der Qualität der Umsetzung kann dadurch erreicht werden, dass nach Beendigung der Zufuhr von Abwasser in einen ersten Raum des Reaktors die Belüftung eines zweiten Raums des Reaktors begonnen wird.

Besonders bevorzugt ist es, wenn das Verhältnis der Abzugsmenge von Klarwasser zu der Abzugsmenge von Schlamm über 10:1 beträgt. Durch das obige Verhältnis wird die Menge der Biomasse festgelegt, die in jedem Arbeitszyklus aus dem Reaktor abgezogen wird. Wird zu wenig Biomasse abgezogen, so kann sich bei Beendigung des Arbeitszyklus keine ausreichende Klarwasserzone im oberen Reaktorbereich ausbilden. Es besteht somit die Gefahr, dass das Klarwasser durch mitgerissene Biomasse verunreinigt wird. Im umgekehrten Fall wird das Inventar des Reaktors an Biomasse zu stark verringert, so dass die Umsetzungsgeschwindigkeit und -qualität leidet. Außerdem wird letztlich eine größere Menge Wasser im Kreis geführt, was die Leistungsfähigkeit der Gesamtanlage verringert.

In einer bevorzugten Variante des erfindungsgemäßen Verfahrens wird die Zirkulationsströmung erst nach dem Einbringen einer vorbestimmten Abwassermenge erzeugt. Der Zeitpunkt, an dem die Zirkulation beginnt, ist dadurch gegeben, dass der Pegelstand die Überströmkante erreicht. Auf diese Weise kann anfänglich eine besonders wirksame Denitrifikation bewirkt werden.

Weiters betrifft die vorliegende Erfindung eine Vorrichtung zur Reinigung von Abwasser gemäß Anspruch 9.

Vorzugsweise ist in dem Reaktor eine Trennwand vorgesehen, die den Reaktor in zwei Räume unterteilt, dass in einem unterem Bereich der Trennwand eine Düse ausgebildet ist, die die beiden Räume verbindet, wobei die Zufuhröffnung im Bereich der Düse angeordnet ist, und dass im oberen Bereich der Trennwand eine Überströmkante vorgesehen ist, die eine weitere Verbindung der beiden Räume begrenzt. Die Form des erfindungsgemäßen Reaktors ist grundsätzlich keiner besonderen Beschränkung unterworfen. Zumeist wird der Reaktor eine allgemein zylindrische Form aufweisen, was kreisförmige, quadratische, rechteckige oder vieleckige Grundrisse umfasst.

Eine optimale Abwasserreinigung ergibt sich dann, wenn die beiden Räume des Reaktors im wesentlichen gleich groß ausgebildet sind. Dabei ist eine besonders einfache Herstellung des erfindungsgemäßen Reaktors möglich, wenn der Reaktor zylindrisch oder vieleckig ausgebildet ist, wobei die Trennwand im wesentlichen eben ist und durch den Mittelpunkt des Reaktors hindurchgeht.

In einer besonders bevorzugten Ausführungsvariante der Erfindung ist vorgesehen, dass die Düse als Lavaldüse ausgebildet ist, und dass die Zufuhröffnung am Ende eines Rohres ausgebildet ist, das koaxial zur Düse angeordnet ist. Auf diese Weise kann erreicht werden, dass die Umwälzung des Reaktorinhaltes ein Vielfaches der eingedüsten Abwassermenge ausmacht.

Vorzugsweise ist vorgesehen, dass die Überströmkante der Trennwand in einer Höhe angeordnet ist, die 70 bis 90 %, vorzugsweise 80 bis 85 % des Reaktorinhalts entspricht. Bei einen im wesentlichen zylindrischen Reaktor ist das Füllvolumen proportional zur Füllhöhe, so dass die obigen Angaben direkt die Höhe der Trennwand betreffen. Bei anderen Reaktortypen müssen die Höhenangaben entsprechend der Querschnittsform umgerechnet werden.

Es ist an sich ausreichend, wenn im oberen Bereich der Trennwand eine Verbindung zwischen dem ersten und dem zweiten Raum geschaffen ist. Besonders einfach ist jedoch, wenn die Überströmkante als Oberkante der Trennwand ausgebildet ist. In einer Variante der vorliegenden Erfindung ist vorgesehen, dass die erste Abzugsöffnung im wesentlichen in der Höhe der Überströmkante ausgebildet ist. Durch die Höhe der Abzugsöffnung wird die maximale Klarwassermenge definiert, die in einem Arbeitszyklus abgelassen werden kann. Wenn die Abzugsöffhung auf der Höhe der Überströmkante liegt oder darüber angeordnet ist, dann wird das Klarwasser automatisch aus beiden Räumen abgezogen.

Alternativ dazu kann jedoch auch vorgesehen sein, dass die erste Abzugsöffnung in einer Höhe unterhalb der Überströmkante im Bereich der Verbindung der Trennwand mit einer Außenwand des Reaktors angeordnet ist, so dass die erste Abzugsöffnung mit beiden Räumen des Reaktors in Verbindung steht. Auf diese Weise kann die Trennung zwischen den beiden Räumen verbessert werden und trotzdem wird gewährleistet, dass das Klarwasser aus beiden Räumen gleichmäßig abgezogen wird.

Es ist weiters besonders günstig, wenn die zweite Abzugsöffaung in einer Höhe angeordnet ist, die einem Reaktorinhalt zwischen 20 und 50 %, vorzugsweise zwischen 30 und 40 % des Gesamtinhalts des Reaktors entspricht. An sich ist es wünschenswert, den Belebtschlamm in möglichst hoher Konzentration abzuziehen, um den Klarwasseranteil pro Arbeitszyklus groß zu halten. Dementsprechend wäre es am günstigsten, die zweite Abzugsöffnung möglichst weit unten im Reaktor anzuordnen. Es kann jedoch der Fall eintreten, dass zufolge einer Verunreinigung oder dgl. das Ventil, das die zweite Abzugsöffnung steuert, nicht vollständig schließt. In diesem Fall läuft der gesamte Reaktorinhalt bis auf die Höhe der zweiten Abzugsöffnung aus. Um auch in einem solchen Störfall ein bestimmtes Mindestinventar an Biomasse im Reaktor zu halten, ist die obige Höhe der zweiten Abzugsöffnung erforderlich.

In der Folge wird die Erfindung anhand der in den Figuren dargestellten Ausführungsvarianten näher erläutert. Es zeigen:
- Fig. 1: ein generelles Verfahrensschaubild einer Ausführungsvariante der Erfindung;

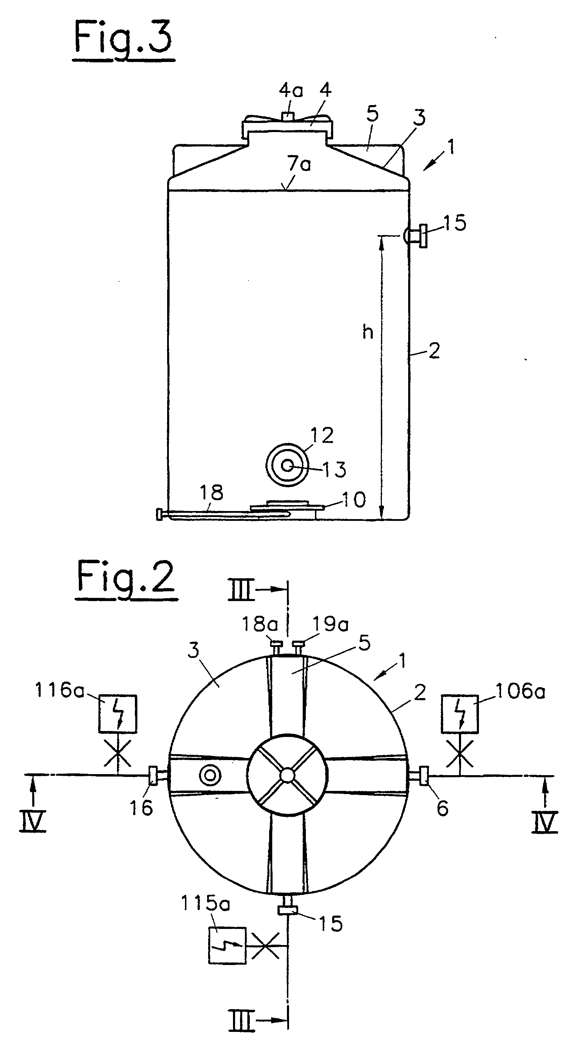

- Fig. 2: einen Grundriss eines bevorzugten Reaktors;
- Fig. 3: einen Schnitt nach Linie III-III in Fig. 2;

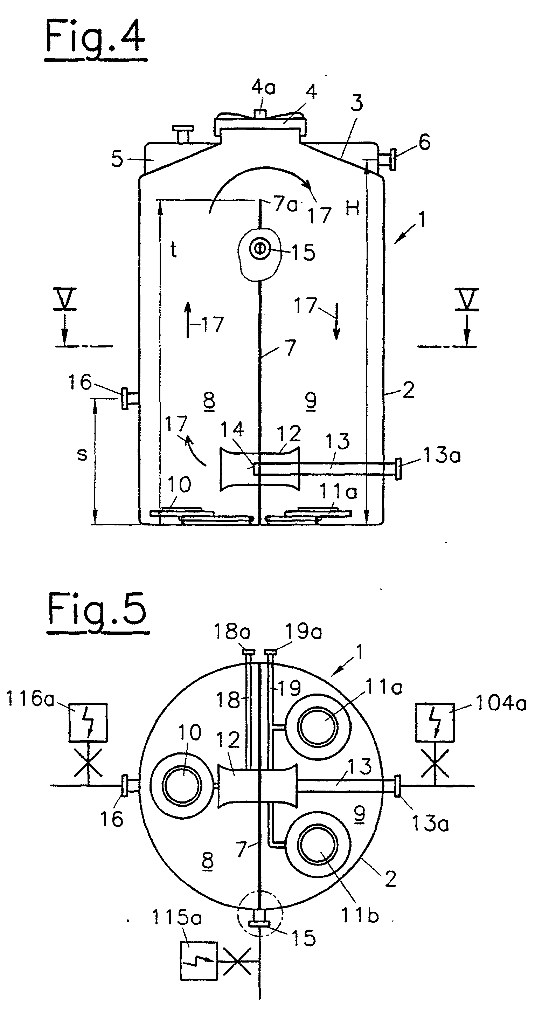

- Fig. 4: einen Schnitt nach der Linie IV-IV in Fig. 2;
- Fig. 5: einen Schnitt nach der Linie V-V in Fig. 4;
- Fig. 6: ein schematisches Zeitdiagramm über einen erfindungsgemäßen Verfahrenszyklus; und
- Fig. 7: eine weitere Ausführungsvariante der Erfindung.

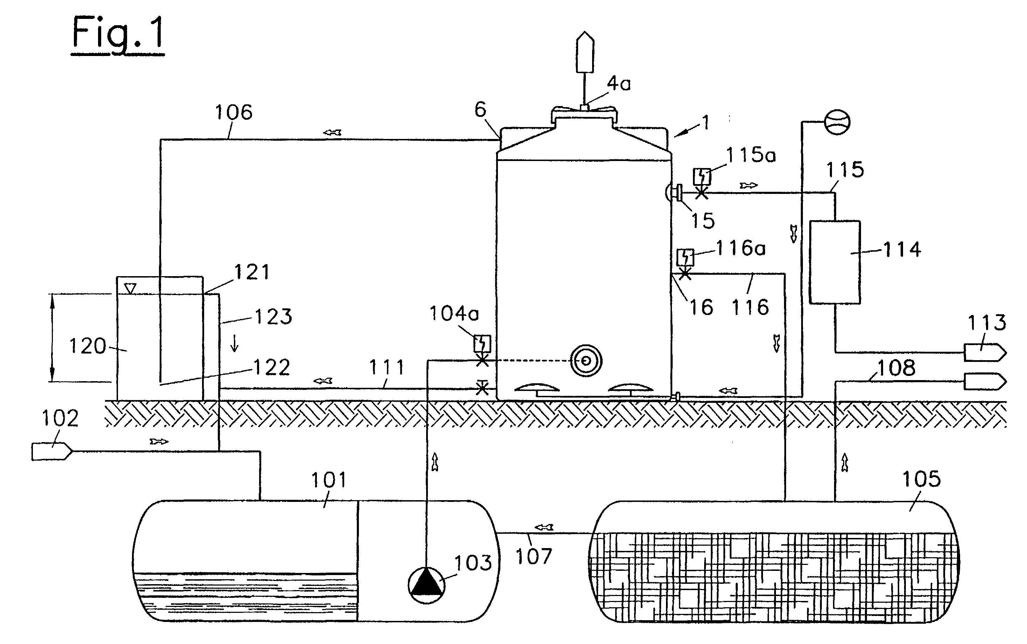

In der Fig. 1 ist das grundsätzliche Schaltschema zur Ausführung des erfindungsgemäßen Verfahrens dargestellt. Ein Pufferbehälter 101 wird über einen Zulauf 102 mit Abwasser versorgt. Der Pufferbehälter 101 dient zum Ausgleich des kontinuierlich mit unterschiedlichen Raten zuströmenden Abwassers. Eine Pumpe 103 fördert über eine Leitung 104 das Abwasser aus dem Pufferbehälter 101 in einen Reaktor 1. Ein elektromagnetisch betätigbares Ventil 104a verhindert die Rückströmung des Reaktorinhalts in den Pufferbehälter 101. Im obersten Bereich des Reaktors 1 ist eine Überlauföffnung 6 vorgesehen, die über eine Überlaufleitung 106 mit einem Gegendruckbehälter 120 verbunden ist. Zwischen einem Überlauf 121 des Gegendruckbehälters 120 und der Mündung 122 der Überlaufleitung 106 besteht eine Höhendifferenz h, die den Druck im Reaktor 1 regelt. Der Überlauf 121 ist über eine Leitung 123 mit dem Pufferbehälter 101 verbunden. Eine Belüftungsöffnung 4a des Reaktors 1 steht mit der Umgebung in Verbindung. Eine Entleerungsleitung 111 dient zum völligen Entleeren der Reaktors 1 bei einer Stillegung oder dgl.

Im oberen Bereich des Reaktors 1 ist eine erste Abzugsöffnung 15 vorgesehen, die zum Abzug von Klarwasser dient. Über ein elektromagnetisches Ventil 115a wird das Klarwasser in eine Klarwasserleitung 115 abgezogen, die in eine Probenentnahmevorrichtung 114 mündet und weiter zu einem Klarwasserablauf 113 führt.

Unterhalb der ersten Abzugsöffnung 15 ist im Reaktor 1 eine zweite Abzugsöffnung 16 vorgesehen, die über ein elektromagnetisch betätigbares Ventil 116a und eine Schlammabzugsleitung 116 mit einem Schlammlager 105 in Verbindung steht. Trübwasser kann aus dem Schlammlager 105 über eine Trübwasserleitung 107 in den Pufferbehälter 101 übergeführt werden. Eine Entnahmeleitung 108 ermöglicht die Leerung des Schlammlagers 105.

Der Reaktor 1 besteht aus einer zylindrischen Außenwand 2, die oben durch eine Abdeckung 3 abgeschlossen ist. In der Mitte der Abdeckung 3 ist ein Mannloch-Deckel 4 mit einer Belüftungsöffnung 4a vorgesehen. Die Abdeckung 3 besitzt weiters rippenartige Vorsprünge 5, von denen einer eine Überlauföffnung 6 aufweist. Eine senkrechte Trennwand 7 unterteilt den Reaktor 1 in einen ersten Raum 8 und einen zweiten Raum 9. Die Oberkante der Trennwand 7 ist als Überströmkante 7a ausgebildet. Im Bodenbereich der Räume 8, 9 sind Lüfter 10, bzw. 11a, 11b vorgesehen, die dazu ausgebildet sind, Luft durch die Räume 8 bzw. 9 hindurchzuleiten. Weiters ist im unteren Bereich der Trennwand 7 eine Düse 12 angeordnet, die die Räume 8, 9 miteinander verbindet und in der Form einer Lavaldüse ausgebildet ist. Dies bedeutet, dass sich die Düse zunächst verengt und dann wieder erweitert. Ein Rohr 13 ist von einem Anschluss 13a an der Außenseite des Reaktors 1 koaxial zur Düse 12 in diese hineingeführt und endet in einer Zufuhröffnung 14 innerhalb der Düse 12. Weiters sind in der Außenwand des Reaktors 1 eine erste Abzugsöffnung 15 und eine zweite Abzugsöffnung 16 vorgesehen. Die Höhe h der ersten Abzugsöffnung 15 entspricht etwa 80% der Höhe H des gesamten Reaktorvolumens, die durch die Überlauföffnung 6 gegeben ist. Die erste Abzugsöffnung 15 ist in der Ebene der Trennwand 7 angeordnet, so daß sie mit beiden Räumen 8, 9 in Verbindung steht. Auf diese Weise wird das Klarwasser gleichmäßig aus beiden Räumen 8, 9 abgezogen.

Die Höhe t der Trennwand 7 ist größer als die Höhe h der ersten Abzugsöffnung 15, und sie entspricht etwa 90% der Höhe H des gesamten Reaktorvolumens. Wenn nun der Reaktor 1 bis auf die Höhe der ersten Abzugsöffnung 15 entleert wird, dann bedeutet dies, dass während der ersten Hälfte des folgenden Befüllungsvorganges ohne Zirkulationsströmung in dem ersten Raum 8 vollkommen anaerobe Bedingungen vorliegen. Erst wenn der Wasserspiegel die Überströmkante 7a erreicht, bildet sich eine Zirkulationsströmung entsprechend den Pfeilen 17 aus, die durch die Strömung in der Düse 12 angetrieben wird. Es ist jedoch nicht notwendig, das Klarwasser in jedem Zyklus bis auf die Höhe der ersten Abzugsöffnung 15 abzulassen. Im allgemeinen wird die Öffnungszeit des Ventils 115a von einer Steuerungseinrichtung in Abhängigkeit der anfallenden Abwassermenge und Schmutzfracht eingestellt. Ein Schließen des Ventils 115a vor dem Erreichen der Höhe der Abzugsöffnung 15 hat auch den Vorteil, dass allfälliger Schwimmschlamm im Reaktor 1 nicht in das gereinigte Abwasser gelangen kann.

Die Höhe s der zweiten Abzugsöffnung 16 entspricht etwa 40% der Höhe H des gesamten Reaktorvolumens. Auf diese Weise wird sichergestellt, dass auch bei einer Fehlfunktion des Ventils 116a etwa 40 % des Reaktorinhalts vor dem Auslaufen geschützt wird.

Die Lüfter 10; 11a, 11b werden über Leitungen 18; 19 mit Druckluft versorgt, die Anschlüsse 18a, 19a aufweisen.

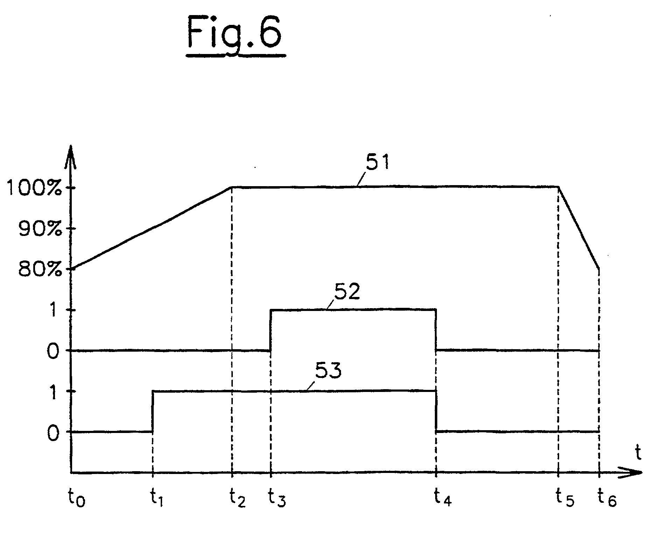

In der Folge wird der Betrieb der erfindungsgemäßen Vorrichtung anhand eines Zeitdiagramms der Fig. 6 näher erläutert. Zu Beginn des Arbeitszyklus, zum Zeitpunkt t₀, ist der Reaktor bis auf die Höhe h der ersten Abzugsöffnung 15 entleert. Der im Reaktor 1 befindliche Schlamm enthält die zur Reinigung des Abwassers notwendige Biomasse. Zum Zeitpunkt t₀ beginnt der Zustrom von Abwasser über die Zufuhröffnung 14. In der Kurve 51 ist die Füllmenge des Reaktors 1 in Prozent dargestellt. Es ist ersichtlich, dass zum Zeitpunkt t₂ die maximale Füllhöhe von 100 % erreicht ist. Die Zufuhr von Abwasser wird noch eine kurze Zeit weiter fortgesetzt, so dass Abwasser über die Überlauföffnung 6 ausfließt und in den Pufferbehälter 101 zurückgeführt wird. Die Kurven 52 bzw. 53 bezeichnen die Belüftung durch die Lüfter 10 bzw. 11a und 11b, wobei mit 0 keine Belüftung und mit 1 Belüftung bezeichnet ist.

Zu einem Zeitpunkt t₁, der zwischen t₀ und t₂ liegt, wird in dem zweiten Raum 9 mit der Belüftung über die Lüfter 11a, 11b begonnen. Im ersten Raum 8 liegen anaerobe Verhältnisse vor, so dass eine Denitrifikation stattfindet. Im zweiten Raum 9 findet unter aeroben Verhältnissen eine Nitrifikation statt. Das nitrifizierte Abwasser aus dem zweiten Raum 9 wird durch die Düsenwirkung des zuströmenden Abwassers in den ersten Raum 8 mitgerissen und dort der Denitrifikation unterworfen, sobald der Pegelstand im ersten Raum 8 die Höhe t der Überströmkante 7a erreicht. Da sich die Düse 12 im unteren Bereich des Reaktors 1 befindet, reichert sich der Schlamm im ersten Raum 8 an, was die Denitrifikation begünstigt.

Zum Zeitpunkt t₃ wird auch der Lüfter 10 im ersten Raum 8 zugeschaltet, um auch hier eine Nitrifikation durchzuführen. Zu einem Zeitpunkt t₄ wird die Belüftung beendet, um in einer Retentionsphase im oberen Bereich des Reaktors 1 eine Klarwasserzone zu bilden. Zwischen den Zeitpunkten t₅ und t₆ wird über die erste Abzugsöffnung Klarwasser abgezogen, während über die zweite Abzugsöffnung Schlamm abgezogen wird. Die Zeitdauer zwischen t₀ und t₆ ist die Zykluszeit.

Die Länge der einzelnen Zeitabschnitte ist je nach Auslegung des Reaktors und den unterschiedlichen Betriebsbedingungen sehr unterschiedlich. Über nicht dargestellte Sensoren werden in an sich bekannter Weise Messwerte ermittelt, um die Steuerung des Reaktors optimal zu gestalten. Generell kann davon ausgegangen werden, dass bei einer Auslegung für weniger verschmutzte Abwässer bei Nennlast Zykluszeiten von etwa 1,5 Stunden oder darunter realisierbar sind. Bei Anlagen für schwierig zu behandelnde oder sehr stark verschmutzte Abwässer geht man von einer Zykluszeit von etwa 3 Stunden aus. Es muss jedoch festgehalten werden, dass diese Werte Richtwerte darstellen, die von der Steuerung der Anlage veränderbar sind.

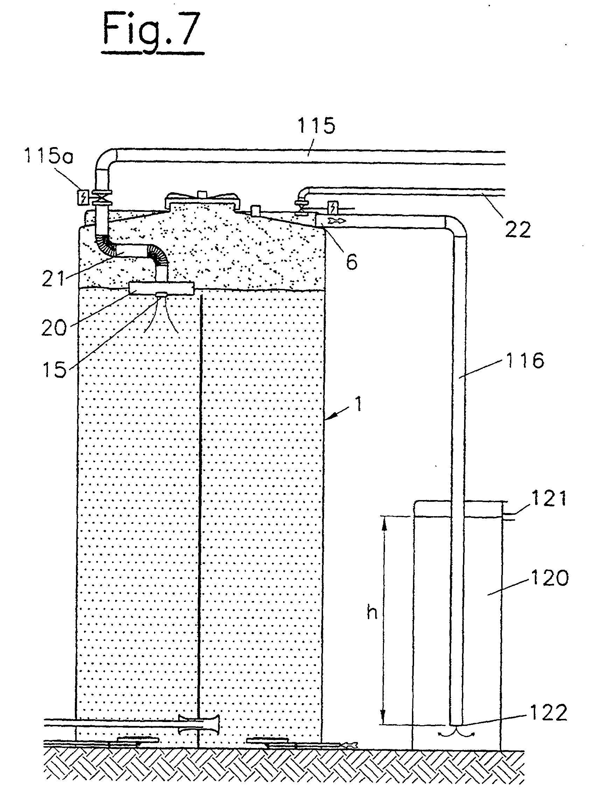

In der Fig. 7 ist der Reaktor 1 einer bevorzugten Ausführungsvariante detailliert dargestellt. Zusätzlich zu den oben beschriebenen Elementen ist die erste Abzugsöffnung 15 in einem Schwimmer 20 ausgebildet, so dass der Abzug von Klarwasser immer unmittelbar unterhalb der Oberfläche erfolgt. Der Schwimmer 20 ist über einen flexiblen Leitungsabschnitt 21 mit der Klarwasserleitung 115 verbunden, die gegebenenfalls mit einer nicht dargestellten selbstansaugenden Pumpe versehen ist. Eine zusätzliche Druckluftleitung 22 dient dazu, den Reaktor 1 auch ohne Belüftung unter Druck setzen zu können.

Der Betrieb dieser Ausführungsvariante erfolgt folgendermaßen: zunächst wird der Reaktor 1 gefüllt, bis eine geringe Menge des Reaktorinhalts über die Überlauföffnung 6 ausströmt. Anschließend daran wird der Reaktor wie oben beschrieben belüftet, wobei gegebenenfalls eine unterschiedliche Belüftung der einzelnen Kammern des Reaktors 1 erfolgen kann. Die Luft wird aus der Überlauföffnung 6 herausgedrückt und durchströmt den Gegendruckbehälter 120. Bei einer Höhe h von beispielsweise 2,5 m stellt sich somit im Reaktor 1 ein Überdruck von 0,25 bar ein. Falls in einer anaeroben Phase eine Steigerung des Drucks erforderlich ist, wird Druckluft über die Leitung 22 zugeführt. Anschließend wird das Klarwasser über den Schwimmer 20 abgezogen, wodurch ein Arbeitszyklus vollendet ist.

Das erfindungsgemäße Verfahren ist außerordentlich robust und arbeitet mit einem hohen Wirkungsgrad.

## Patentansprüche

1. Verfahren zur Reinigung von Abwasser, bei dem wiederholt folgende Schritte ausgeführt werden:
- Zufuhr von Abwasser in einen Reaktor (1);
- Belüften des Reaktorinhalts;
- Beenden der Belüftung, um Schlamm absetzen zu lassen;
- Abzug von Klarwasser und Schlamm;
wobei der Reaktor (1) während des Belüftens und des Absetzens unter einem gegenüber dem Umgebungsdruck erhöhten Druck gehalten wird, **dadurch gekennzeichnet,** daß das Klarwasser über einen Schwimmer jeweils unmittelbar unterhalb der Oberfläche abgezogen wird.

2. Verfahren nach Anspruch 1, **dadurch gekennzeichnet,** daß der Überdruck im Reaktor (1) in einem Bereich von 0,2 bar bis 0,8 bar, vorzugsweise zwischen 0,4 bar und 0,6 bar gehalten wird.

3. Verfahren zur Reinigung von Abwasser, bei dem wiederholt folgende Schritte ausgeführt werden:
- Zufuhr von Abwasser in einen Reaktor (1);
- Belüften des Reaktorinhalts;
- Beenden der Belüftung, um Schlamm absetzen zu lassen;
- Abzug von Klarwasser und Schlamm;
**dadurch gekennzeichnet,** daß die Zufuhr des Abwassers in den Bereich einer Düse (12) erfolgt, die zwei durch eine Trennwand (7) getrennte Räume (8, 9) des Reaktors (1) verbindet, um durch die Zufuhr des Abwassers eine Zirkulationsströmung zwischen den Räumen (8, 9) des Reaktors hervorzurufen und daß das Klarwasser über einen Schwimmer jeweils unmittelbar unterhalb der Oberfläche abgezogen wird..

4. Verfahren nach einem der Ansprüche 1 bis 3, **dadurch gekennzeichnet**, daß die Zufuhrmenge des Abwassers in jedem Arbeitszyklus zwischen 10 und 30 %, vorzugsweise zwischen 15 und 20 % des Gesamtinhalts des Reaktors (1) entspricht.

5. Verfahren nach einem der Ansprüche 1 bis 4, **dadurch gekennzeichnet,** daß die Zufuhr von Abwasser so lange erfolgt, bis der Pegel des Reaktorinhalts eine Überströmöffnung (6) erreicht, und daß ein geringer Teil des Reaktorinhalts über die Überströmöffnung (6) ausströmen gelassen wird.

6. Verfahren nach einem der Ansprüche 1 bis 5, **dadurch gekennzeichnet,** daß während der Zufuhr von Abwasser in einen ersten Raum (8) des Reaktors (1) die Belüftung eines zweiten Raums (9) des Reaktors (1) begonnen wird.

7. Verfahren nach einem der Ansprüche 1 bis 6, **dadurch gekennzeichnet,** daß nach Beendigung der Zufuhr von Abwasser eine Belüftung des ersten Raumes (8) durchgeführt wird.

8. Verfahren nach einem der Ansprüche 1 bis 7, **dadurch gekennzeichnet,** daß die Zirkulationsströmung erst nach dem Einbringen einer vorbestimmten Abwassermenge erzeugt wird.

9. Vorrichtung zur Reinigung von Abwasser mit einem Reaktor, der über einen vorgeschalteten Pufferbehälter (101) diskontinuierlich mit dem zu reinigenden Abwasser beschickt wird, wobei der Reaktor (1) eine Zufuhröffnung (14), eine erste Abzugsöffnung (15) zum Abzug von Klarwasser und vorzugsweise eine zweite Abzugsöffnung (16) zum Abzug von Schlamm aufweist, und wobei Lüfter (10; 11a, 11b) zur Belüftung des Reaktorinhalts vorgesehen sind, **dadurch gekennzeichnet,** daß die erste Abzugsöffnung in einem Schwimmer ausgebildet ist

10. Vorrichtung nach Anspruch 9, **dadurch gekennzeichnet,** daß eine Überströmöffnung vorgesehen ist, die mit einem Gegendrucksystem in Verbindung steht, um den Reaktor (1) unter einem vorbestimmten Überdruck zu halten.

11. Vorrichtung nach Anspruch 10, **dadurch gekennzeichnet**, daß das Gegendrucksystem als Gegendruckbehälter ausgebildet ist, in den eine Überlaufleitung eintaucht, die mit der Überströmöffnung in Verbindung steht.

12. Vorrichtung nach einem der Ansprüche 9 bis 11, **dadurch gekennzeichnet**, daß in dem Reaktor (1) eine Trennwand (7) vorgesehen ist, die den Reaktor (1) in zwei Räume (8, 9) unterteilt, daß in einem unterem Bereich der Trennwand (7) eine Düse (12) ausgebildet ist, die die beiden Räume (8, 9) verbindet, wobei die Zufuhröffnung (14) im Bereich der Düse (12) angeordnet ist, und daß im oberen Bereich der Trennwand (7) eine Überströmkante (7a) vorgesehen ist, die eine weitere Verbindung der beiden Räume (8, 9) begrenzt.

13. Vorrichtung nach Anspruch 12, **dadurch gekennzeichnet,** daß die beiden Räume (8, 9) des Reaktors (1) im wesentlichen gleich groß ausgebildet sind.

14. Vorrichtung nach einem der Ansprüche 12 oder 13, **dadurch gekennzeichnet,** daß der Reaktor (1) zylindrisch oder vieleckig ausgebildet ist, wobei die Trennwand (7) im wesentlichen eben ist und durch die Mittelachse des Reaktors (1) hindurchgeht.

15. Vorrichtung nach einem der Ansprüche 12 bis 14, **dadurch gekennzeichnet**, daß die Düse (12) als Lavaldüse ausgebildet ist, und daß die Zufuhröffnung (14) am Ende eines Rohres (13) ausgebildet ist, das koaxial zur Düse (12) angeordnet ist.

16. Vorrichtung nach einem der Ansprüche 12 bis 15, **dadurch gekennzeichnet**, daß die Überströmkante (7a) der Trennwand (7) in einer Höhe (t) angeordnet ist, die 70 bis 90 %, vorzugsweise 80 bis 85 % des Reaktorinhalts entspricht.

17. Vorrichtung nach einem der Ansprüche 12 bis 16, **dadurch gekennzeichnet,** daß die Überströmkante (7a) als Oberkante der Trennwand (7) ausgebildet ist.

18. Vorrichtung nach einem der Ansprüche 12 bis 17, **dadurch gekennzeichnet**, daß die zweite Abzugsöffnung (16) in einer Höhe (s) angeordnet ist, die einem Reaktorinhalt zwischen 20 und 50 %, vorzugsweise zwischen 30 und 40 % des Gesamtinhalts des Reaktors (1) entspricht.

## Claims

1. Method for purifying sewage involving the following, repeatedly performed steps:
- the sewage is passed into a reactor (1);
- the contents of the reactor are aerated;
- aeration is terminated to allow the sludge to settle out;
- clarified water and sludge are drawn off;
the reactor (1) being kept under an increased pressure relative to the ambient pressure during aeration and sedimentation, **characterized in that** the clarified water is respectively drawn off immediately underneath the surface by way of a float.

2. Method according to claim 1, **characterized in that** the excess pressure in the reactor (1) is kept within a range of 0.2 bar to 0.8 bar, preferably between 0.4 bar and 0.6 bar.

3. Method for purifying sewage involving the following, repeatedly performed steps:
- sewage is passed into a reactor (1);
- the contents of the reactor are aerated;
- aeration is terminated to allow the sludge to settle out;
- clarified water and sludge are drawn off;
**characterized in that** the sewage is passed into the reactor in the region of a nozzle (12) that connects two compartments (8, 9) of the reactor (1) that are divided by a partition wall (7) in order to create a circulation flow between the compartments (8, 9) of the reactor by having the sewage admitted and that the clarified water is respectively drawn off immediately underneath the surface by way of a float.

4. Method according to one of the claims 1 through 3, **characterized in that** the amount of sewage that is admitted in each operating cycle corresponds to between 10 and 30%, preferably between 15 and 20% of the overall content of the reactor (1).

5. Method according to one of the claims 1 through 4, **characterized in that** the sewage is admitted until the level of the content in the reactor reaches an overflow port (6) and that a small portion of the reactor's contents is allowed to flow out via the overflow port (6).

6. Method according to one of the claims 1 through 5, **characterized in that** while sewage is passed into a first compartment (8) of the reactor (1), aeration of a second compartment (9) of the reactor (1) is started with.

7. Method according to one of the claims 1 through 6, **characterized in that** once the supply of sewage is completed, the first compartment (8) is aerated.

8. Method according to one of the claims 1 through 7, **characterized in that** the circulation flow is only generated after a predetermined amount of sewage has been admitted.

9. Device for purifying sewage with a reactor that is discontinuously charged with the sewage to be purified via a buffer container (101) placed in front of it, the reactor (1) being provided with an intake port (14), a first discharge port (15) for drawing off clarified water and preferably a second discharge port (16) for drawing off sludge, and ventilators (10; 11a, 11b) being provided for aerating the contents of the reactor, **characterized in that** the first discharge port is designed in a float.

10. Device according to claim 9, **characterized in that** there is provided an overflow port that communicates with a counterpressure system for keeping the reactor (1) under a predetermined excess pressure.

11. Device according to claim 10, **characterized in that** the counterpressure system is designed as a counterpressure container, an overflow pipe that communicates with the overflow port plunging there into.

12. Device according to one of the claims 9 through 11, **characterized in that** there is provided in the reactor (1) a partition wall (7) that divides the reactor (1) into two compartments (8, 9), that a nozzle (12) that connects the two compartments (8, 9) is formed in a lower region of the partition wall (7), the intake port (14) being arranged in the region of the nozzle (12) and that an overflow edge (7a) is provided in the upper region of the partition wall (7), said overflow edge limiting further connection of the two compartments (8, 9).

13. Device according to claim 12, **characterized in that** the two compartments (8, 9) of the reactor (1) are substantially equal in size.

14. Device according to one of the claims 12 or 13, **characterized in that** the reactor (1) is cylindrical or polygonal in shape, the partition wall (7) being substantially plane and going through the central axis of the reactor (1).

15. Device according to one of the claims 12 through 14, **characterized in** that the nozzle (12) is designed as a de Laval nozzle and that the intake port (14) is provided at the end of a pipe (13) that is arranged coaxially to the nozzle (12).

16. Device according to one of the claims 12 through 15, **characterized in that** the overflow edge (7a) of the partition wall (7) is accommodated at a height (t) corresponding to 70 to 90%, preferably to 80 to 85% of the reactor's contents.

17. Device according to one of the claims 12 through 16, **characterized in that** the overflow edge (7a) is designed as the upper edge of the partition wall (7).

18. Device according to one of the claims 12 through 17, **characterized in that** the second discharge port (16) is accommodated at a height (s) that corresponds to a reactor's content of between 20 and 50%, preferably to between 30 and 40% of the overall content of the reactor (1).

## Revendications

1. Procédé d'épuration des eaux usées, dont les étapes suivantes sont répétées:
- acheminement des eaux usées vers un réacteur (1),
- aération du contenu du réacteur;
- arrêt de l'aération pour permettre aux boues de se déposer;
- évacuation des eaux clarifiées et des boues;
le réacteur (1) étant maintenu sous une pression supérieure à la pression ambiante pendant l'aération et la sédimentation, **caractérisé en ce que** les eaux clarifiées sont évacuées par un flotteur toujours immédiatement en dessous de la surface.

2. Procédé selon la revendication 1, **caractérisé en ce que** la surpression dans le réacteur (1) est maintenue entre 0,2 bar et 0,8 bar, de préférence entre 0,4 bar et 0,6 bar.

3. Procédé d'épuration des eaux usées, dont les étapes suivantes sont répétées:
- acheminement des eaux usées vers un réacteur (1),
- aération du contenu du réacteur;
- arrêt de l'aération pour permettre aux boues de se déposer;
- évacuation des eaux clarifiées et des boues;
**caractérisé en ce que** les eaux usées sont acheminées vers la région d'une tuyère (12) qui relie deux compartiments (8, 9) du réacteur (1) séparés par une cloison (7) afin de générer, par l'amenée des eaux usées, un courant circulatoire entre les compartiments (8, 9) du réacteur et en ce que les eaux clarifiées sont évacuées par un flotteur toujours immédiatement en dessous de la surface.

4. Procédé selon l'une quelconque des revendications 1 à 3, **caractérisé en ce que,** à chaque cycle opératoire, la quantité d'eaux usées amenée correspond à entre 10 et 30%, de préférence entre 15 et 20% du contenu total du réacteur (1).

5. Procédé selon l'une quelconque des revendications 1 à 4, **caractérisé en ce que** les eaux usées sont acheminées jusqu'au moment où le niveau du contenu du réacteur atteint une ouverture de trop-plein (6) et où il est permis à une petite quantité du contenu du réacteur de s'écouler par l'ouverture de trop-plein (6).

6. Procédé selon l'une quelconque des revendications 1 à 5, **caractérisé en ce que,** pendant que les eaux usées sont acheminées vers un premier compartiment (8) du réacteur (1), un second compartiment (9) du réacteur (1) commence à être aéré.

7. Procédé selon l'une quelconque des revendications 1 à 6, **caractérisé en ce que,** une fois l'amenée des eaux usées terminée, le premier compartiment (8) est aéré.

8. Procédé selon l'une quelconque des revendications 1 à 7, **caractérisé en ce que** le courant circulatoire n'est généré qu'après l'amenée d'une quantité d'eaux usées prédéterminée.

9. Dispositif d'épuration d'eaux usées avec un réacteur qui est alimenté en eaux usées à épurer par intermittence par un récipient-tampon (101) placé avant, le réacteur (1) étant pourvu d'une ouverture d'alimentation (14), d'une première ouverture d'évacuation (15) destinée à l'évacuation des eaux clarifiées et de préférence d'une deuxième ouverture d'évacuation (16) destinée à l'évacuation des boues, des ventilateurs (10; 11a, 11b) étant prévus pour aérer le contenu du réacteur, **caractérisé en ce que** la première ouverture d'évacuation est ménagée dans un flotteur.

10. Dispositif selon la revendication 9, **caractérisé en ce que** une ouverture de trop-plein qui communique avec un système à contre-pression est prévue pour maintenir le réacteur (1) sous une surpression prédéterminée.

11. Dispositif selon la revendication 10, **caractérisé en ce que** le système à contre-pression est un récipient à contre-pression dans lequel plonge un conduit de trop-plein qui communique avec l'ouverture de trop-plein.

12. Dispositif selon l'une quelconque des revendications 9 à 11, **caractérisé en ce que** une cloison (7) est prévue dans le réacteur (1), ladite cloison séparant le réacteur (1) en deux compartiments (8, 9), qu'une tuyère (12) reliant les deux compartiments (8, 9) est ménagée dans une zone inférieure de la cloison (7), l'ouverture d'alimentation (14) étant disposée dans la zone de la tuyère (12) et qu'un bord de trop-plein (7a) limitant une autre communication entre les deux compartiments (8, 9) est prévu dans la zone supérieure de la cloison (7).

13. Dispositif selon la revendication 12, **caractérisé en ce que** les deux compartiments (8, 9) du réacteur (1) sont essentiellement de même taille.

14. Dispositif selon l'une quelconque des revendications 12 ou 13, **caractérisé en ce que** le réacteur (1) est cylindrique ou polygonal, la cloison (7) étant essentiellement plane et traversant l'axe central du réacteur (1).

15. Dispositif selon l'une quelconque des revendications 12 à 14, **caractérisé en ce que** la tuyère (12) est une tuyère de Laval et que l'ouverture d'alimentation (14) est ménagée à l'extrémité d'un tuyau (13) disposé de manière à être coaxial avec la tuyère (12).

16. Dispositif selon l'une quelconque des revendications 12 à 15, **caractérisé en ce que** le bord de trop-plein (7a) de la cloison (7) est disposé à une hauteur (t) correspondant à 70 à 90%, de préférence à 80 à 85% du contenu du réacteur.

17. Dispositif selon l'une quelconque des revendications 12 à 16, **caractérisé en ce que** le bord de trop-plein (7a) constitue le bord supérieur de la cloison (7).

18. Dispositif selon l'une quelconque des revendications 12 à 17, **caractérisé en ce que** la deuxième ouverture d'évacuation (16) est disposée à une hauteur (s) correspondant à un contenu de réacteur représentant entre 20 et 50%, de préférence entre 30 et 40% du contenu total du réacteur (1).
